Europäisches Patentamt

European Patent Office

Office européen des brevets

(11) Veröffentlichungsnummer: **0 229 210**
**A1**

(12) **EUROPÄISCHE PATENTANMELDUNG**

(21) Anmeldenummer: 86100503.1

(22) Anmeldetag: 16.01.86

(51) Int. Cl.⁴: **D21G 1/00** , **D21F 3/06** ,
**F16C 13/00**

(43) Veröffentlichungstag der Anmeldung:
**22.07.87 Patentblatt 87/30**

(84) Benannte Vertragsstaaten:
**DE FR GB**

(71) Anmelder: **MOOG GmbH**
**Hanns-Klemm-Strasse 28**
**D-7030 Böblingen(DE)**

(72) Erfinder: **Kollmar, Friedrich**
**Krähenweg 15**
**D-7031 Grafenau(DE)**

(74) Vertreter: **Patentanwälte Grünecker,**
**Kinkeldey, Stockmair & Partner**
**Maximilianstrasse 58**
**D-8000 München 22(DE)**

(54) **Steuerschaltung für eine hydrostatisch gelagerte Stützwalze.**

(57) Die vorliegende Erfindung betrifft eine Steuerschaltung 10 bis 16 für eine hydrostatisch gelagerte Stützwalze 1, die eine Mehrzahl von hydrostatischen Lagern 7a bis 7d aufweist, von denen jedes mittels eines Steuerventils 10a bis 10d mit einem Hydraulikmittel versorgbar ist. Die Steuerschaltung beinhaltet zwei an den Kanten der Stützwalze 1 angeordnete Wegaufnehmer 12a, 12b, deren die Lage der Kante darstellendes Ausgangssignal mit einem Soll-Lagesignal zu jeweils einem Lageabweichungssignal verknüpft wird.

Zum Erzielen eines optimalen dynamischen Regelverhaltens der Steuerschaltung ist für jedes Servoventil 10a bis 10d ein Proportionalregelglied 14a bis 14d vorgesehen, das dem Steuerventil 10a bis 10d ein Ventilsteuersignal zuführt, welches proportional zu der Summe aus dem jeweiligen Lageabweichungssignal und einem Korrektursignal $k_2$ bis $k_4$ zum Einstellen eines Druckprofiles ist.

## Steuerschaltung für eine hydrostatisch gelagerte Stützwalze

Die vorliegende Erfindung betrifft eine Steuerschaltung für eine hydrostatisch gelagerte Stützwalze.

Preßwerke, die auch unter der Bezeichnung Kalander bekannt sind, finden insbesondere Anwendung in der papierherstellenden Industrie zum gleichmäßigen Pressen, Verdichten, Glätten und Entwässern von Papierbahnen. Derartige Preßwerke oder Kalander weisen in der Regel eine Vielzahl von Walzen auf, die im wesentlichen vertikal übereinander angeordnet sind. Zumindest die unterste Walze innerhalb eines Kalanders ist an einem in seiner Höhe festgelegten Stützjoch hydrostatischen gelagert. Die oberhalb der Stützwalze angeordneten Gegenwalzen liegen jeweils mit ihrer Gewichtskraft auf dem zu glättenden Gut, das eine Papierbahn sein kann, auf der darunterliegenden Walze auf, wobei die unterste Gegenwalze innerhalb eines Kalanders auf der Stützwalze über das dazwischenliegende Gut aufliegt. Die Gegenwalzen sind also vertikal verschieblich angeordnet, so daß sie letztlich von der am Stützjoch ortsfest gehaltenen Stützwalze getragen werden. Die Stützwalze ist gegenüber ihrem Stützjoch an einer Vielzahl von in axialer Richtung des Stützjoches nebeneinanderliegenden hydrostatischen Lagerstellen, die jeweils einen Hydraulikmitteldruckfilm gegenüber dem Mantel der Stützwalze aufbauen, gelagert. Die hydrostatische Lagerung der Stützwalze dient jedoch nicht nur zur reibungsarmen Lagerung des drehbaren Stützwalzenmantels gegenüber dem ortsfersten Stützjoch, sondern auch durch geeignete, für jede Lagerstelle unterschiedliche Druckbeaufschlagung zum Ausgleich von Verformungen der Stützwalze, die sich aufgrund der Belastung der Stützwalze durch die Gegenwalzen anderenfalls ergeben würde. Bei anderen Anforderungen könen die vielen, in axialer Richtung versetzten, jewesle mit einem individuellen Druck angesteuerten Lagerstellen zum Erzeugen eines gewünschten Druckverlaufes in Richtung der Achse der Stützwalze dienen.

Ein am Markt erhältlicher Kalander weist eine Steuerschaltung für die hydrostatisch gelagerte Stützwalze auf, die mit zwei an den Kanten der Stützwalze angeordneten Wegaufnehmern verbunden ist, deren die Lage der Stützwalzenkante darstellendes Ausgangssignal zu jeweils einem Lageabweichungssignal für die Lageabweichung jeder Stützwalzenkante verarbeitet wird. Ferner ist an jeder der Vielzahl von hydrostatischen Lagerstellen ein Druckaufnehmer angeordnet, mit dem ein den Druck an der Lagerstelle darstellendes Signal erzeugbar ist. Die Steuerschaltung weist für jede Lagerstelle einen Druckregelkreis auf, der ein Integralregelglied enthält. Genauer gesagt wird dem Integralregelglied das Drucksignal von dem Druckaufnehmer als Ist-Wert zugeführt, während ein vom Lageabweichungssignal abgeleitetes Signal als Soll-Wert zugeführt wird. Das Integralregelglied steht ausgangsseitig mit dem Steuerventil für das hydrostatische Lager in Verbindung. Kurz gesagt bildet die bekannte Steuerschaltung für jedes hydrostatische Lager einen Druckregelkreis mit einem Integralregelglied, dem als Ist-Wert das Drucksignal und als Soll-Wert ein von der Lageabweichung abgeleitetes Signal zugeführt wird. Ferner wird jeder einzelne Druckregelkreis an der Eingangsseite des Integralregelgliedes mit einem Signal zur Variation des Druckverlaufes in Achsrichtung der Stützwalze beaufschlagt.

Die einzelnen Druckregelkreise beziehen also ihre Ist-Werte von den Druckaufnehmern, während die Soll-Werte sowohl von den übergeordneten Lageregelkreisen als auch von der Steuerung zur Einstellung des Druckprofils stammen.

Die bekannte Steuerschaltung für Stützwalzen hat sich in mehrfacher Hinsicht als problematisch herausgestellt. Wenn die Stützwalze von einer Ruhestellung in ihre Arbeitsstellung gefahren werden soll, was bei jedem Beginn der Glättens einer neu eingelegten Papierbahn der Fall ist, so wird die gewünschte Stellung nur äußerst träge mit störenden Überschwingern erreicht. Zwar wäre es möglich, Überschwinger durch Steigerung des Proportionalanteils des Proportional-Integral-Regelgliedes des Druckreglers zu vermindern, doch findet sich eine Grenze in der möglichen Proportionalverstärkung aufgrund des Frequenzganges des Steuerventils, der den Frequenzgang zwischen dem Eingangssteuersignal des Steuerventiles und der Druckveränderung des hydrostatischen Lagers festlegt. Bei weiterer Erhöhung des Proportionalanteiles ergibt sich, wie praktische Versuche gezeigt haben, aufgrund des sogenannten "Helmholz-Effektes" ein Pfeifen in dem aus Steuerventil und hydrostatischen Lager gebildeten hydrostatischen System.

Mit anderen Worten besteht bei der bekannten Steuerschaltung eine Abhängigkeit im Frequenzgang des Lageregelkreises vom Frequenzgang des Druckregelkreises, so daß eine Änderung der Regelkreiseigenschaften des Druckregelkreises ebenfalls eine Änderung der Regelkreiseigenschaften des überlagerten Lageregelkreises nach sich zieht.

Gegenüber diesem Stand der Technik liegt der vorliegenden Erfindung die Aufgabe zugrunde, eine Steuerschaltung der gattungsgemäßen Art derart weiterzubilden, daß die Stützwalze bei freier Wählbarkeit des Druckprofils ohne Überschwinger mit kurzen Einstellzeiten die gewünschte Lage erreicht und das gewünschte Druckprofil aufbaut.

Diese Aufgabe wird bei einer Steuerschaltung mit den Merkmalen der im Oberbegriff des Anspruches 1 genannten Art durch die Merkmale im kennzeichnenden Teil des Anspruches 1 gelöst.

Ein besonderer Vorteil der erfindungsgemäßen Steuerschaltung liegt darin, daß trotz kurzer Ansprechzeiten auf Abweichungen von der Soll-Lage ein Pfeifen des Hydrauliksystems nach dem sogenannten "Helmholz-Effekt" vermieden wird.

Ein besonderer Vorzug der im Anspruch 2 definierten Steuerschaltung liegt darin, daß die bei derartigen Systemen vorliegenden Nichtlinearitäten der Kennlinie zwischen Druck-und Eingangsspannung des aus Lagerstelle und Steuerventil bestehenden Systems durch die Druckregelung mit dem in Anspruch 2 angegebenen Aufbau kompensiert werden. Mit anderen Worten ist das System, das aus dem Servoventil und dem nachgeschalteten hydrostatischen Lager besteht, nichtlinear, abhängig von der Viskosität des Hydraulikmittels sowie abhängig von einer Drift der Steuerventile. Hieraus ergibt sich ein stark nicht-linearer Zusammenhang zwischen der Eingangssteuerspannung des üblicher Weise als Servoventil ausgeführten Steuerventils und dem Druck im hydrostatischen Lager. Der Druck einer Lagerstelle stellt sich aufgrund des Lageabweichungssignals ein, wobei das für diese Lagerstelle gewählte Korrektursignal Null ist, damit die Gleichgewichtsbedingung erfüllt ist, die sich daraus ergibt, daß die Gegenwalze der Stützwalze nur mit ihrer Gewichtskraft auf der Stützwalze aufliegt, aber ansonsten frei verschiebbar ist. Alle weiteren Steuersignale setzen sich aus diesem Lageabweichungssignal und einem Korrektursignal zusammen, das der Summe aus dem Druckdifferenzsignal für dieses Lager und dem momentanen Drucksignal vom Druckaufnehmer dieses Lagers vemindert um das Signal vom Druckaufnehmer der nicht mit einem Korrektursignal beaufschlagten Lagerstelle entspricht.

Eine besonders einfache und wirkungsvolle Regelung der Horizontalausrichtung der Stützwalze wird durch die im Anspruch 3 angegebenen Maßnahmen erreicht.

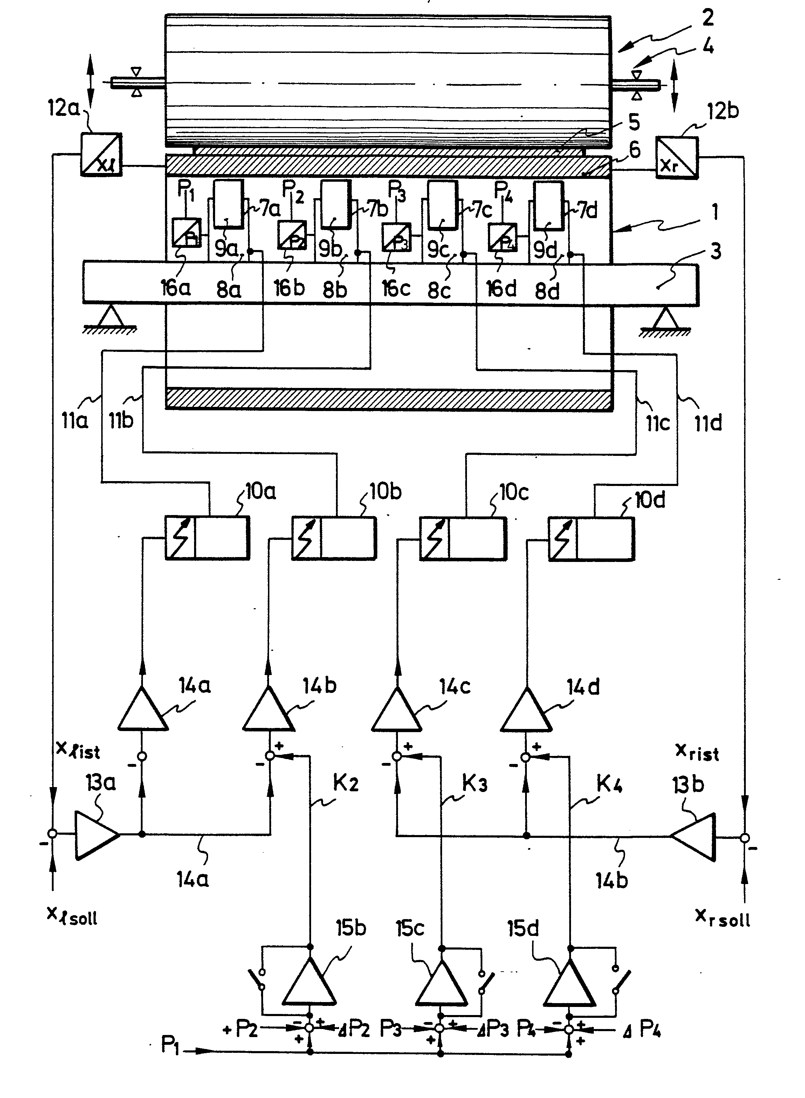

Nachfolgend wird unter Bezugnahme auf die einzige Figur ein bevorzugtes Ausführungsbeispiel gemäß der vorliegenden Erfindung näher erläutert.
Die einzige Figur zeigt:
Ein Prinzipdarstellung der Stützwalze, der Gegenwalze sowie der Steuerschaltung.

Eine Stützwalze 1 trägt eine in vertikaler Richtung frei verschiebbare Gegenwalze 2. Zwischen den beiden Walzen 1,2 läuft das Walzgut, das eine Papierbahn 5 sein kann, hindurch. Die Gegenwalze 2 weist beidseitig eine Gegenwalzenführung 4 auf, mit der die Gegenwalze 2 an einer Bewegung in horizontaler Richtung gehindert wird, während eine freie Verschiebbarkeit der Gegenwalze 2 in vertikaler Richtung gewährleistet ist.

Ebenfalls ist es möglich, daß die Stützwalze 1 und die Gegenwalze 2 Bestandteile eines Kalanders sind, in dem eine Vielzahl von weiteren Gegenwalzen, die ebenfalls vertikal beweglich geführt sind, vertikal oberhalb der Gegenwalze 2 liegen. Der aus den Walzen gebildete Walzenturm kann durch eine abschließende hydrostatisch gelagerte Andrückwalze abgeschlossen sein, bei der die hydrostatischen Lager nur druckgeregelt sind, da die Lage durch die untere Stützwalze bestimmt wird.

Bei der Stützwalze 1 handelt es sich um eine sogenannte hydrostatisch gelagerte Walze. Die Stützwalze enthält ein Stützjoch 3, das nicht-drehend und abgesehen von einer Grundeinstellbarkeit ortsfest angeordnet ist. Das drehfeste Stützjoch 3 ist in an sich bekannter Art von einem Walzenmantel 6 umgeben, der gegenüber dem Stützjoch 3 durch eine Vielzahl von hydrostatischen Lagern 7a bis 7d drehbar geführt ist. Die hydrostatischen Lager 7a bis 7d bestehen aus jeweils einem Hydraulikmittelzylinder 8a bis 8d, in denen sogenannte Plungerkolben 9a bis 9d geführt werden. Die Plungerkolben 9a bis 9d weisen eine oder eine Vielzahl von Hydraulikmittel-Drucktrittsbohrungen (nicht gezeigt) auf, die einen Druchtritt des Hydraulikmittels von den Hydraulikmittelzylindern 8a bis 8d zu einem hydrostatischen Hydraulikmittelfilm erlauben, der zwischen der Außenfläche der Plungerkolben 9a bis 9d und der Innenseite des Walzenmantels 6 liegt. Durch das ständig durch die Bohrungen hindurchtretende Hydraulikmittel ist der Walzenmantel 6 schwimmend, reibungsarm und verschleißfrei gelagert.

Bereits hier sie angemerkt, daß anstelle der bei der gezeigten Ausführungsform lediglich vier Lager bei praktische realisierten Ausführungsformen eine erheblich höhere Anzahl von Lagern eingesetzt werden kann. Zusätzlich zu den gezeigten, eine vertikale, nach oben gerichtete Kraft erzeugenden Lagern kann im Bereich der Außenbereiche der Stützwalze 1 jeweils eins oder mehrere von nach unten wirkenden Lagern angeordnet sein, um den Variationsbereich des einstellbaren Druckprofils zu erhöhen.

Die Hydraulikmittelzylinder 8a bis 8d stehen über Zuführleitungen 11a bis 11d mit als Servoventile ausgeführten Steuerventilen 10a bis 10d in Verbindung. Die Servoventile 10a bis 10d werden in an sich bekannter Weise von einer Hydraulikmittel-teldruckquelle versorgt. Das Servoventil verbindet die Hydraulikmitteldruckquelle in Abhängigkeit von der Größe eines elektrischen Steuersignals entweder mit den Zuführleitungen 11a bis 11d oder verbindet diese mit einem Hydraulikmittelsumpf, der ebenfalls nicht dargestellt ist.

An den beiden Kanten der Stützwalze 1 sind Wegaufnehmer 12a, 12b angeordnet, die die vertikale Lage der jeweiligen Seite der Stützwalze 1 gegenüber einer besseren Höhe messen und ein die vertikale Stüzwalzenlage darstellendes Lagesignal erzeugen. An jeden Hydraulikmittelzylinder 8a bis 8d ist ein Druckaufnehmer 16a bis 16d angeschlossen, der jeweils ein den momentanen Hydraulikmitteldruck darstellendes Signal P1 bis P4 erzeugt.

Das von den Wegaufnehmern 12a, 12b erzeugte Lagesignal $X_{list}$ , $X_{rist}$ wird mittels Lagesignal-Differenzverstärkern 13a, 13b mit Soll-Lagesignalen $X_{lsoll}$, $X_{rsoll}$ verglichen und zu Lageabweichungsignalen 14a, 14b verarbeitet. Die Lageabweichungsignale 14a des linken Lage-Differenzverstärkers 13a werden Summiererverstärkern 14a, 14b der beiden linken Servoventile 10a, 10b zugeführt. Das Lageabweichungssignal 14b vom rechten Lagesignal-Differenzverstärker 13b wird den beiden Summierverstärkern 14c, 14d der beiden rechten Servoventile 10c, 10d zugeführt. Gleichfalls wird den Summierverstärkern 14b bis 14d mit Ausnahme des ersten Summierverstärkers 14a ein Druckprofil-Korrektursignal $k_2$ bis $k_4$ zugeführt.

Vorzugsweise werden die Korrektursignale $k_2$ bis $k_4$ durch Druckregelkreise erzeugt, die aus Druckregelverstärkern 15b bis 15d bestehen. Den Druckregelverstärkern 15b bis 15d wird jeweils das Drucksignal P1 des ersten Druckaufnehmers 16a mit positiven Vorzeichen zugeführt, um das Drucksignal P2 bis P4 des zugeordneten Druckaufnehmers 16b bis 16d vermindert und um ein Differenzdrucksollsignal ΔP2 bis ΔP4 erhöht, mit dem von einer nicht gezeigten Einstellschaltung aus das Druckprofil eingestellt wird.

Durch geeignete Einstellung der Soll-Lagesignale $X_{lsoll}$ , $X_{rsoll}$ wird eine horizontale Ausrichtung oder eine Schräglage der Stützwalze 1 erreicht.

Hebt man beispielsweise zur Erzielung eines zu den Rändern der Stützwalze hin abfallenden und in der Mittel ein Maximum aufweisenden Druckprofils die Druckdifferenzsollsignale ΔP2, ΔP3 an, während das Druckdifferenzsollsignal ΔP4 abgesenkt wird, so würde die überwiegende Erhöhung der Korrektursignale zu einer Anhebung der Gesamtlage des Walzenmantels 6 führen. Dem wirken aber die Lagedifferenzsignale entgegen, die in diesem Fall bei nur unmerklicher Verschiebung der Vertikallage des Walzenmantels aufgrund der hohen Lageregelkreisverstärkung erzeugt werden. Somit ergibt sich zum Erzielen des Gleichgewichtszustandes eine entsprechende Absenkung auch des dem Servoventil 10a zugeführten Signales aufgrund des sich einstellenden Gleichgewichtszustandes. Demzufolge brauchen lediglich drei der vier gezeigten Servoventile 10b bis 10d neben dem Lageregelkreis mit einem Korrektursignal angesteuert werden, das von den Druckregelverstärkern 15a-15d erzeugt wird.

In Abweichung zu der gezeigten Anordnung, bei der die linke Hälfte der Servoventile mit einem Lageabweichungssignal angesteuert wird, das vom linken Wegaufnehmer abgegeben wird, und die rechte Hälfte der Servoventile von einem Lageabweichungssignal angesteuert wird, das vom rechten Wegaufnehmer erzeugt wird, ist es auch möglich, nur die jeweiligen äußeren Servoventile mit dem genannten Lageabweichungssignalen zu beaufschlagen, während mittlere Servoventile entweder von einem arrythmetischen Mittel der Lageabweichungssignale oder von einem Konstantsteuerwert beaufschlagt werden.

Anstelle der elektrischen Ausführungs der Steuerschaltung kann diese auch rein hydraulisch ausgeführt sein, wobei in diesem Fall Wandlerelemente an der jeweiligen Schnittstelle zwischen Elektrik und Hydraulik entfallen können.

## Ansprüche

1. Steuerschaltung für eine hydrostatisch gelagerte Stützwalze (1), die gegenüber einem Stützjoch (3) mittels einer Mehrzahl von hydrostatischen Lagern (7a bis 7d) abgestützt ist, von denen jedes mittels eines Steuerventels (10a bis 10d) mit einem Hydraulikmittel versorgbar ist,
mit zwei an den Kanten der Stützwalze (1) angeordneten Wegaufnehmern (12a, 12b), deren die Lage der Kante der Stützwalze (1) darstellendes Ausgangssignal in der Steuerschaltung jeweils mit einem Soll-Lagesignal zu jeweils einem Lageabweichungssignal verknüpft wird,
**dadurch gekennzeichnet,**
daß die Steuerschaltung für jedes Steuerventil (10a bis 10d) ein Proportionalregelglied (14a bis 14d) aufweist, das dem Steuerventil (10a bis 10d) ein Ventilsteuersignal zuführt, das proportional zu der Summe aus dem jeweiligen Lageabweichungssignal (14a, 14b) und einem Korrektursignal ($k_2$ bis $k_4$) zum Einstellen eines Druckprofiles ist.

2. Steuerschaltung nach Anspruch 1, mit Druckaufnehmern (16a bis 16d) zum Erzeugen eines den Druck des Hydraulikmittels der hydrostatischen Lager (7a bis 7d) darstellenden Drucksignals (P1 bis P4), **dadurch gekennzeichnet,**
daß bei einer Stützwalze (1) mit einer Anzahl n von Lagern (7a bis 7d) ein Korrektursignal $k_x$ für das Steuerventil der Lagerstelle x Null ist, und daß die Korrektursignale $k_i$ für die Steuerventile (10a bis 10d) der Lagerstelle i proportional sind zu der Summe aus dem Drucksignal vom Druckaufnehmer (16a) an der Lagerstelle x und einem vorgebbaren Druckdifferenzsignal ($\Delta$Pi) für die Lagerstelle i vermindert um das Drucksignal von dem Druckaufnehmer (16b bis 16d) an der Lagerstelle i.

3. Steuerschaltung nach Anspruch 1 oder 2, mit einer geraden Anzahl (n) von Lagerstellen (7a bis 7d),

**dadurch gekennzeichnet,**

daß den Proportionalregelgliedern (14a bis 14d), die den auf einer Hälfte der Stützwalze (1) liegenden Lagern (7a bis 7d) zugeordnet sind, jeweils das Lageabweichungssignal (14a, 14b) aufgrund des Lagesignals des auf der gleichen Hälfte der Stützwalze (1) angeordneten Wegaufnehmers (12a, 12b) zugeführt wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 140 776 (CLECIM) <br> * Insgesamt * | 1,2 | D 21 G 1/00 <br> D 21 F 3/06 <br> F 16 C 13/00 |
| A | | 3 | |
| | --- | | |
| X | EP-A-0 140 196 (SULZER-ESCHER-WYSS) <br> * Insgesamt * | 1,3 | |
| | --- | | |
| A | GB-A-2 049 516 (ESCHER WYSS) <br> * Insgesamt * | 1,2 | |
| | --- | | |
| A | FR-A-2 504 951 (ESCHER WYSS) <br> * Insgesamt * | 1,3 | |
| | --- | | |
| A | GB-A-2 156 101 (KUSTERS) <br> * Insgesamt * | 1 | RECHERCHIERTE SACHGEBIETE (Int. Cl.4) |
| | --- | | D 21 G <br> F 16 C |
| A | DE-A-3 200 490 (ESCHER WYSS) <br> * Insgesamt * | 1 | D 21 F |
| | ----- | | |

Der vorliegende Recherchenbericht wurde für alle Patentansprüche erstellt.

| Recherchenort <br> DEN HAAG | Abschlußdatum der Recherche <br> 23-09-1986 | Prüfer <br> DE RIJCK F. |
|---|---|---|